# EUROPEAN PATENT APPLICATION

(11) **EP 4 424 433 A1**
(43) Date of publication of application: **04.09.2024**
(21) Application number: 22893036.8
(22) Date of filing: 11.10.2022
(51) Int. Cl.: B09B 3/40, C02F 1/02, B09B 3/65, C02F 3/28, C02F 11/121, B01D 53/00, B01D 17/00, C02F 101/30

(54) **ORGANIC WASTE TREATMENT APPARATUS AND METHOD WITH IMPROVED ENERGY CONSUMPTION EFFICIENCY AND INCREASED TEMPERATURE RISE RATES**

(30) Priority: 11.11.2021 KR 20210154795; 11.11.2021 KR 20210154803
(71) Applicant: BKT Co., Ltd., Daejeon 34109 (KR)
(72) Inventor: CHOI, Young Soo, Sejong 30126 (KR); JEONG, Guk, Yuseong-gu Daejeon 34109 (KR); JUNG, Min Ki, Seo-gu Daejeon 35202 (KR); CHOI, Jae Min, Yuseong-gu Daejeon 34109 (KR)
(74) Representative: Sander, Rolf
(86) International application number: PCT/KR2022/015252
(87) International publication number: WO 2023/085613

(57) **Abstract**

Disclosed are an organic waste treatment apparatus and method with improved energy consumption efficiency and increased heating rates. An aspect of the present embodiment provides an organic waste treatment method and apparatus with improved energy consumption efficiency and increased heating rates. The apparatus includes a preheating tank configured to receive and preheat organic waste to be treated; a plurality of thermal hydrolysis reactors; a steam-water separator; a decompression tank; a post-treatment unit; and a control unit.

## Description

### CROSS-REFERENCE TO RELATED APPLICATIONS

This application is a continuation of International Application No. PCT/KR2022/015252 filed on October 11, 2022, which claims priority to Korean Patent Application No. 10-2021-0154795 filed on November 11, 2021 and Korean Patent Application No. 10-2021-0154803 filed on November 11, 2021, the entire contents of which are herein incorporated by reference.

### Technical Field

The present disclosure relates to an organic waste treatment apparatus and method having improved energy consumption efficiency and heating rate.

### Background Art

Contents described in this part merely provide background information of the present embodiment and do not constitute a prior art.

Organic waste contained in sewage and wastewater is treated by a sludge reduction process, such as anaerobic digestion and dewatering. However, it is difficult to biologically decompose the organic waste having a complex and rigid structure, such as sludge, or a long time is required to decompose the organic waste. Furthermore, the organic waste has a limit in dewatering due to internal water within a cell or pore water between cells. In order to solve the problem, conventionally, physical or chemical treatment or two or more pieces of merged pre-treatment are performed in order to treat the organic waste. However, the applicability of such pre-treatment has a limit due to energy consumption, secondary contamination, etc.

Thermal hydrolysis process using a high temperature and high pressure is a pre-treatment technology that recently attracts attention. Thermal hydrolysis process has partially solved the energy consumption problem, and the applicability thereof is expanded because secondary contamination does not occur. However, because heat energy having a high temperature is used in the thermal hydrolysis process, efforts are underway to maximize utility while conserving energy and to address operational problems that may occur due to high pressure.

### SUMMARY

### Technical Problem

An embodiment of the present disclosure has an object of providing an organic waste treatment apparatus and method having improved energy consumption efficiency and heating rate.

### Technical Solution

According to an aspect of the present disclosure, an organic waste treatment apparatus that discharges organic waste by decomposing the organic waste includes a preheating tank configured to receive and preheat organic waste to be treated, a plurality of thermal hydrolysis reactors each configured to receive the preheated organic waste from the preheating tank and to thermally hydrolyze the preheated organic waste within a preset environment, a steam-water separator configured to receive some of gaseous components of a product that has been thermally hydrolyzed in any one thermal hydrolysis reactor, to separate the gaseous components and liquid components, and to discharge the gaseous components to another thermal hydrolysis reactor and the liquid components to a decompression tank, the decompression tank configured to receive all of the remaining products except the some of the gaseous components included in the product that has been thermally hydrolyzed in each thermal hydrolysis reactor, to separate the gaseous components and the liquid components, and to discharge the gaseous components to the preheating tank and the liquid components to an outside, a post-treatment unit configured to receive the liquid components discharged by the decompression tank and to post-treat and discharge the received liquid components, and a control unit configured to control an operation of each component of the organic waste treatment apparatus.

According to an aspect of the present disclosure, each of the plurality of thermal hydrolysis reactors receives the preheated organic waste from the preheating tank at a time interval and thermally hydrolyzes the preheated organic waste within the preset environment.

According to an aspect of the present disclosure, the preset environment has pressure of 1 to 23 bar and a temperature of 100 to 220°C.

According to an aspect of the present disclosure, the decompression tank has relatively lower pressure than the thermal hydrolysis reactor and liquefies some of the product that has been thermally hydrolyzed.

According to an aspect of the present disclosure, the post-treatment unit may be implemented as an anaerobic digestion tank or a sludge dewatering unit.

According to an aspect of the present disclosure, the organic waste treatment apparatus further includes an ejector configured to inject steam that is introduced from the outside and the gaseous components that are separated and discharged by the steam-water separator to any one thermal hydrolysis reactor.

According to an aspect of the present disclosure, the ejector increases a speed at which the gaseous components separated and discharged by the steam-water separator are injected into any one thermal hydrolysis reactor.

According to an aspect of the present disclosure, a method of treating organic waste so that an organic waste treatment apparatus can decompose and discharge the organic waste includes a preheating process of receiving and preheating organic waste to be treated by using a preheating tank, a hydrolysis process of receiving the organic waste preheated in the preheating process and thermally hydrolyzing the organic waste within a preset environment by using a first thermal hydrolysis reactor, a refining process of receiving some of gaseous components included in a product that has been thermally hydrolyzed in the hydrolysis process, separating the gaseous components and liquid components, and discharging the gaseous components to a second thermal hydrolysis reactor and the liquid components to a decompression tank by using a steam-water separator, a discharge process of receiving all of the remaining products except the some of the gaseous components included in the product that has been thermally hydrolyzed in the hydrolysis process, separating the gaseous components and the liquid components by decompressing the remaining products, and discharging the gaseous components to the preheating tank and the liquid components to the outside by using a decompression tank, and a post-treatment process of receiving, post-treating, and discharging the liquid components discharged by the decompression tank.

According to an aspect of the present disclosure, each of the first thermal hydrolysis reactor and the second thermal hydrolysis reactor receives the preheated organic waste from the preheating tank at a time interval and thermally hydrolyzes the preheated organic waste within the preset environment.

According to an aspect of the present disclosure, the preset environment has pressure of 1 to 23 bar and a temperature of 100 to 220°C.

According to an aspect of the present disclosure, the decompression tank has relatively lower pressure than the thermal hydrolysis reactor and liquefies some of the product that has been thermally hydrolyzed.

According to an aspect of the present disclosure, the post-treatment process may be implemented by an anaerobic digestion tank or a sludge dewatering unit.

### Advantageous Effects

As described above, according to an aspect of the present disclosure, there is an advantage in that energy efficiency and a treatment rate can be improved in performing a thermal hydrolysis reaction in order to post-treat organic waste.

### Brief Description of Drawings

FIG. 1 is a diagram illustrating a configuration of an organic waste treatment apparatus according to a first embodiment of the present disclosure.
FIG. 2 is a diagram illustrating an operation sequence of a thermal hydrolysis reactor according to a first embodiment of the present disclosure.
FIG. 3 is a diagram illustrating an operation sequence of the thermal hydrolysis reactors according to a first embodiment of the present disclosure.
FIGS. 4 to 9 are diagrams illustrating an operation sequence of the organic waste treatment apparatus according to a first embodiment of the present disclosure.
FIG. 10 is a flowchart illustrating an organic waste treatment method according to a first embodiment of the present disclosure.
FIG. 11 is a diagram illustrating a construction of an organic waste treatment apparatus according to a second embodiment of the present disclosure.
FIG. 12 is a diagram illustrating some of an operation of the organic waste treatment apparatus according to the second embodiment of the present disclosure.

### Detailed Description

The present disclosure may be changed in various ways and may have various embodiments. Specific embodiments are to be illustrated in the drawings and specifically described. It should be understood that the present disclosure is not intended to be limited to the specific embodiments, but includes all of changes, equivalents and/or substitutions included in the spirit and technical range of the present disclosure. Similar reference numerals are used for similar components while each drawing is described.

Terms, such as a first, a second, A, and B, may be used to describe various components, but the components should not be restricted by the terms. The terms are used to only distinguish one component from another component. For example, a first component may be referred to as a second component without departing from the scope of rights of the present disclosure. Likewise, a second component may be referred to as a first component. The term "and/or" includes a combination of a plurality of related and described items or any one of a plurality of related and described items.

When it is described that one component is "connected" or "coupled" to the other component, it should be understood that one component may be directly connected or coupled to the other component, but a third component may exist between the two components. In contrast, when it is described that one component is "directly connected to" or "directly coupled to" the other component, it should be understood that a third component does not exist between the two components.

Terms used in this application are used to only describe specific embodiments and are not intended to restrict the present disclosure. An expression of the singular number includes an expression of the plural number unless clearly defined otherwise in the context. In this specification, a term, such as "include" or "have", is intended to designate the presence of a characteristic, a number, a step, an operation, a component, a part or a combination of them, and should be understood that it does not exclude the existence or possible addition of one or more other characteristics, numbers, steps, operations, components, parts, or combinations of them in advance.

All terms used herein, including technical terms or scientific terms, have the same meanings as those commonly understood by a person having ordinary knowledge in the art to which the present disclosure pertains, unless defined otherwise in the specification.

Terms, such as those defined in commonly used dictionaries, should be construed as having the same meanings as those in the context of a related technology, and are not construed as ideal or excessively formal meanings unless explicitly defined otherwise in the application.

Furthermore, each construction, process, procedure, or method included in each embodiment of the present disclosure may be shared within a range in which the constructions, processes, procedures, or methods do not contradict each other technically.

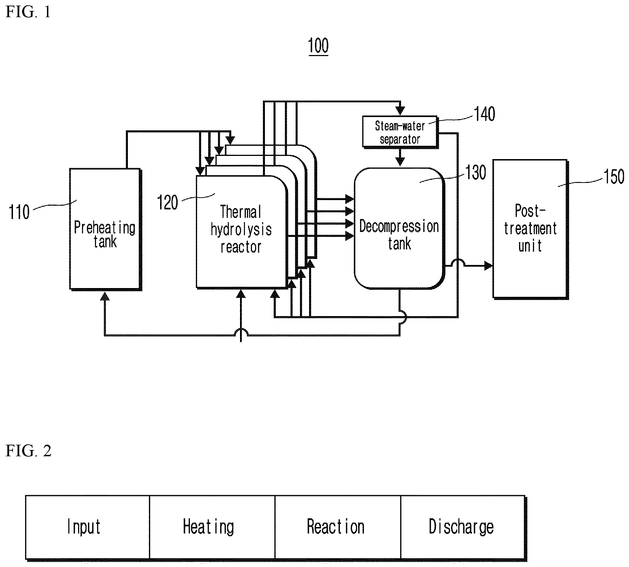

FIG. 1 is a diagram illustrating a configuration of an organic waste treatment apparatus according to an embodiment of the present disclosure.

Referring to FIG. 1, an organic waste treatment apparatus 100 according to an embodiment of the present disclosure includes a preheating tank 110, a plurality of thermal hydrolysis reactors 120, a decompression tank 130, a steam-water separator 140, a post-treatment unit 150, and a control unit (not illustrated).

The preheating tank 110 receives and preheats organic waste to be treated. The thermal hydrolysis reactor 120 to be described later needs to consume a relatively large amount of heat energy because the thermal hydrolysis reactor has to hydrolyze organic waste in a relatively high temperature and high-pressure condition. In order to reduce energy consumption, the preheating tank 110 is disposed at a front end of the thermal hydrolysis reactor 120 in a treatment process, and preheats organic waste to be hydrolyzed.

The preheating tank 110 does not receive heat energy from a separate heat source, but receives gaseous components separated by the decompression tank 130 to be described later. The gaseous components separated by the decompression tank 130 have a predetermined temperature. The organic waste treatment apparatus 100 does not discharge (vent), to the outside, the gaseous components separated by the decompression tank 130, but returns the gaseous components to the preheating tank 110 so that the gaseous components are used for preheating. Accordingly, the amount of energy consumption can be reduced because the preheating tank 110 can preheat the organic waste that is introduced by the gaseous components separated by the decompression tank 130 without the need to receive heat energy from a separate heat source.

The thermal hydrolysis reactor 120 receives the preheated organic waste from the preheating tank 110 and thermally hydrolyzes it. The thermal hydrolysis reactor 120 thermally hydrolyzes the organic waste so that the organic waste can be effectively treated by the post-treatment unit 150 to be described later and discharged to the outside.

The thermal hydrolysis reactor 120 operates as illustrated in FIG. 2.

FIG. 2 is a diagram illustrating an operation sequence of the thermal hydrolysis reactor according to a first embodiment of the present disclosure.

Referring to FIG. 2, first, preheated organic waste is input to the thermal hydrolysis reactor 120. When the organic waste is input, a preset environment needs to be composed so that a thermal hydrolysis reaction is generated in the thermal hydrolysis reactor 120. The preset environment may be an environment having a temperature of 100 to 220°C under pressure of 1 to 23 bar. More specifically, the preset environment may be an environment having a temperature of 160 to 210°C under pressure of about 5 to 20 bar. In this case, heat energy is applied from the outside so that the thermal hydrolysis reactor 120 can secure a preset temperature environment. In the preset environment, in particular, when a sufficient temperature rise occurs and a temperature condition is satisfied, the thermal hydrolysis reactor 120 performs a thermal hydrolysis reaction. The thermal hydrolysis reaction is performed for a preset time (e.g., several tens of minutes). After the reaction is completed, the thermal hydrolysis reactor 120 discharges some of gaseous components included in a product to the steam-water separator 140, and discharges all of the remaining components to the decompression tank 130. The thermal hydrolysis reactor 120 operates as described above, and thermally hydrolyzes the organic waste.

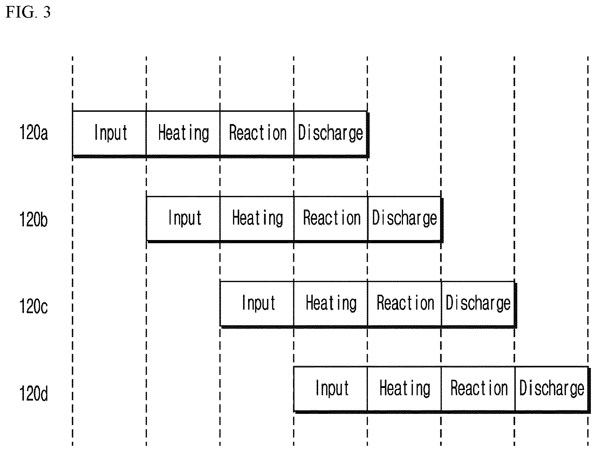

Referring back to FIG. 1, the thermal hydrolysis reactor 120 may be implemented in a plural number. After a thermal hydrolysis reaction is completed, any one thermal hydrolysis reactor 120 discharges some of gaseous components included in a product to the steam-water separator 140. The gaseous components separated by the decompression tank 130 as described above are introduced to the preheating tank 110. Like the decompression tank 130, the steam-water separator 140 to be described later also separates liquid components which may be included in the gaseous components (steam) from the gaseous components. The gaseous components separated by the steam-water separator 140 are introduced into another thermal hydrolysis reactor 120, assisting a temperature composition for thermal hydrolysis reaction. This is made possible because the plurality of thermal hydrolysis reactors 120a to 120d operates as illustrated in FIG. 3.

FIG. 3 is a diagram illustrating an operation sequence of the thermal hydrolysis reactors according to a first embodiment of the present disclosure.

The thermal hydrolysis reactors 120a to 120d each operate as described with reference to FIG. 2, but perform operations with a time difference. For example, as illustrated in FIG. 3, when the thermal hydrolysis reactor 120a receives organic waste from the preheating tank 110 and enters a process of raising a temperature, the thermal hydrolysis reactor 120b may start to receive organic waste from the preheating tank 110. At the point when the thermal hydrolysis reactor 120a starts to thermal hydrolysis reaction of the organic waste, the thermal hydrolysis reactor 120c may start receiving organic waste from the preheating tank 110. At timing at which a product on which a reaction has been completed is discharged to the outside, the thermal hydrolysis reactor 120d may start to receive organic waste from the preheating tank 110. If an operation is performed as described above, gaseous components (steam) that have been discharged by any one thermal hydrolysis reactor 120 and refined as described above are introduced into another thermal hydrolysis reactor that performs a temperature rise. Accordingly, the amount of heat energy consumption necessary for the temperature rise can be reduced.

Referring back to FIG. 1, discarded energy can be minimized and energy consumption for a temperature rise can be reduced because the thermal hydrolysis reactor 120 can secure some of heat that is necessary for a thermal hydrolysis reaction from gaseous components generated by another thermal hydrolysis reactor 120 as described above.

The thermal hydrolysis reactor 120 includes a pressure sensor therein, separates some of gaseous components from a product attributable to a thermal hydrolysis reaction, and discharges the separated gaseous components to the steam-water separator 140 under the control of the control unit (not illustrated) . The thermal hydrolysis reactor 120 senses pressure within the reactor, separates all of the remaining gaseous components except the amount of gaseous components that are necessary to preheat the preheating tank 110 from the product, and discharges all of the remaining gaseous components to the steam-water separator 140. The thermal hydrolysis reactor 120 performs sensing so that the remaining gaseous components, other than those precisely required for preheating, are discharged to the steam-water separator 140 to raise the temperature of another thermal hydrolysis reactor. Conventionally, the whole quantity of gaseous components is discharged to the decompression tank 130. Although all of gaseous components were returned to the preheating tank and used for preheating, the remaining gaseous components that were not used for preheating are all discharged and wasted because gaseous components in the amount more than the amount of gaseous components necessary for the preheating are returned.

Alternatively, the thermal hydrolysis reactor 120 senses whether gaseous components within the reactor have been abnormally excessively increased or whether steam has been excessively received from the outside by sensing internal pressure. When pressure attributable to the gaseous components within the reactor has a preset reference value or more, the thermal hydrolysis reactor 120 discharges all of the gaseous components to the steam-water separator 140 until the pressure has the reference value or less under the control of the control unit (not illustrated). The thermal hydrolysis reactor 120 discharges a predetermined amount of gaseous components to the steam-water separator 140. Accordingly, a danger of explosion of the thermal hydrolysis reactor can be prevented, and heat can be recovered and also used to heat another thermal hydrolysis reactor.

The decompression tank 130 receives some of a product generated by a thermal hydrolysis reaction within the thermal hydrolysis reactor 120, and separates gaseous components and liquid components from the product. Only the liquid components included in the product generated by the thermal hydrolysis reaction correspond to components that will be post-treated and discharged. The gaseous components correspond to components not related to the post-treatment. Accordingly, the decompression tank 130 separates the gaseous components and the liquid components from the product so that the gaseous components are separated and used for preheating. The decompression tank 130 has relatively lower pressure than the thermal hydrolysis reactor 120. The temperature of products drops due to decompression. A component having a melting point that is lower (than a temperature within the decompression tank) maintains a gaseous state, but a component having a melting point that is higher (than a temperature within the decompression tank) is liquefied into liquid components. As described above, the decompression tank 130 generates a pressure difference from the thermal hydrolysis reactor 120 so that a predetermined component has a liquid state and the remaining components have a gaseous state. The decompression tank 130 returns the separated gaseous components to the preheating tank 110. The liquid components are moved to the post-treatment unit 150.

The steam-water separator 140 separates the liquid components by receiving some of the gaseous components discharged from the thermal hydrolysis reactor 120. The thermal hydrolysis reactor 120 operates under relatively high pressure. Accordingly, although only the gaseous components are discharged from the reactor 120, the liquid components may be generated after the gaseous components are discharged or the liquid components may also be discharged as the gaseous components are discharged at high pressure. Accordingly, the steam-water separator 140 separates the gaseous components and the liquid components from the gaseous components of a product that has been thermally hydrolyzed in the thermal hydrolysis reactor, transmits the liquid components to the decompression tank 130, and transmits the gaseous components to another thermal hydrolysis reactor into which preheated organic waste will be introduced. The reason why the steam-water separator 140 separates the gaseous components and the liquid components from the product is as follows. The liquid components that are included in the product generated by the thermal hydrolysis reactor 120 correspond to components on which a thermal hydrolysis reaction has already been completed. If such liquid components are input to the thermal hydrolysis reactor again and undergo a thermal hydrolysis reaction, this corresponds to inefficiency and corresponds to waste in terms of energy consumption. Furthermore, when the organic waste is input from the preheating tank 110 to a specific thermal hydrolysis reactor 120, a proper amount of the organic waste is input so that a thermal hydrolysis reaction can be effectively performed in the thermal hydrolysis reactor 120. In this case, if liquid components that are included in a product generated by another thermal hydrolysis reactor are introduced into the corresponding thermal hydrolysis reactor, a proper amount or more of the liquid components is introduced the corresponding thermal hydrolysis reactor. This causes an inefficient thermal hydrolysis reaction, and causes a proper amount or more of heat energy to be consumed. In order to prevent such problems, the steam-water separator 140 separates the liquid components and the gaseous components from the product that has been discharged by the thermal hydrolysis reactor 120, and transmits the liquid components and the gaseous components to different tanks.

The steam-water separator 140 may be implemented to have any form or structure if the steam-water separator can separate gaseous components and liquid components from a product.

The post-treatment unit 150 treats products that have undergone the thermal hydrolysis reaction in a form in which there is no problem in discharging the product. For example, the post-treatment unit 150 may be implemented as an anaerobic digestion tank, and may discharge digested components to the outside after performing anaerobic digestion. The post-treatment unit may be implemented as a sludge dewatering unit, and may discharge dewatered components to the outside after performing dewatering.

The control unit (not illustrated) controls an operation of each of the components within the organic waste treatment apparatus.

The control unit (not illustrated) controls organic waste to be treated by the preheating tank 110 to be introduced into the preheating tank. In order to preheat the organic waste, the control unit may control the decompression tank 130 to return separated gaseous components to the preheating tank 110.

The control unit (not illustrated) controls the preheating tank 110 to transmit the preheated organic waste to one thermal hydrolysis reactor (e.g., 120a). After the transmission, the control unit (not illustrated) introduces, into the thermal hydrolysis reactor 120a, steam from the outside and gaseous components (steam) that have been separated from a product by another thermal hydrolysis reactor (e.g., 120c) so that a thermal hydrolysis reaction is generated in the thermal hydrolysis reactor 120a. Accordingly, the thermal hydrolysis reactor 120a may perform the thermal hydrolysis reaction.

In this case, the control unit (not illustrated) determines whether pressure within the thermal hydrolysis reactor 120a is a preset reference value or less. When the pressure within the thermal hydrolysis reactor 120a is the preset reference value or less, this corresponds to a situation in which the thermal hydrolysis reaction is performed without any problem. In contrast, when the pressure within the thermal hydrolysis reactor 120a is greater than the preset reference value, this corresponds to a situation in which abnormality may occur in the reactor 120 because gaseous components are abnormally increased or steam is excessively input from the outside. Accordingly, the control unit (not illustrated) discharges the gaseous components to the steam-water separator 140 until the pressure within the thermal hydrolysis reactor becomes the preset reference value or less. Accordingly, the control unit (not illustrated) solves abnormality within the thermal hydrolysis reactor 120a.

If a thermal hydrolysis reaction is performed within the thermal hydrolysis reactor 120a for a preset time, the control unit (not illustrated) discharges some of gaseous components to the steam-water separator 140 and all of the remaining products to the decompression tank 130. In this case, in discharging the gaseous components, the control unit (not illustrated) discharges all gaseous components separated from the decompression tank 130, except for the amount of gaseous components necessary for preheating the organic waste in the preheating tank 110, to the steam-water separator 140. Accordingly, energy efficiency can be maximized because all of the remaining gaseous components except the gaseous components that are necessary for the preheating can be used to heat another thermal hydrolysis reactor without being discharged to the outside.

The control unit (not illustrated) controls the decompression tank 130 to separate gaseous components and liquid components from a product, and controls the decompression tank 130 to discharge the gaseous components to the preheating tank 110 and the liquid components to the post-treatment unit 150.

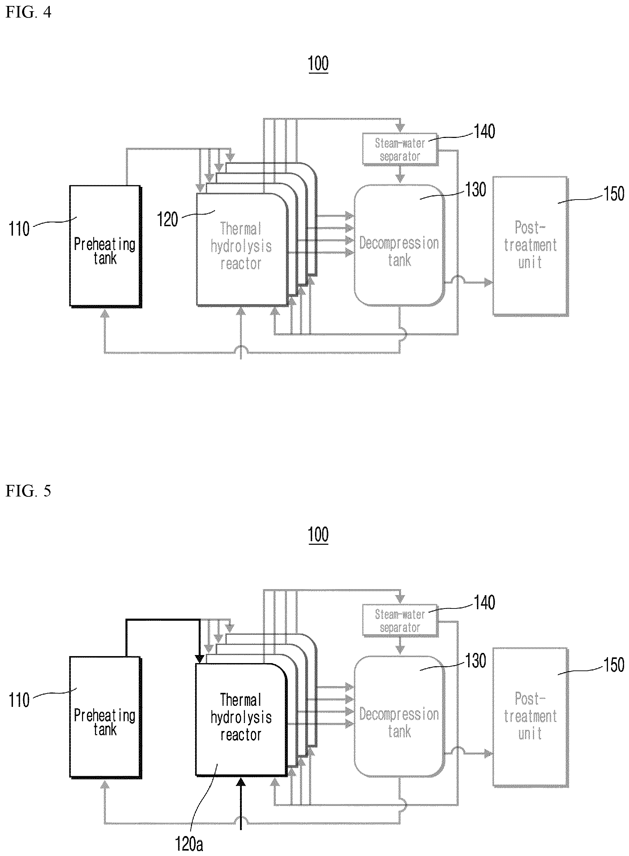

At the same time, the control unit controls the remaining thermal hydrolysis reactors 120b to 120d in parallel so that the thermal hydrolysis reactors operate according to their sequence. A process of controlling, by the control unit (not illustrated), an operation of each of the thermal hydrolysis reactors is described later with reference to FIGS. 4 to 9.

As the control unit (not illustrated) controls each of the components as described above, the application of heat energy from a separate heat source can be minimized because a heat energy source is reused as much as possible without a heat energy source that is discarded.

FIGS. 4 to 9 are diagrams illustrating an operation sequence of the organic waste treatment apparatus according to a first embodiment of the present disclosure. FIGS. 4 to 9 illustrate a process of treating, by the organic waste treatment apparatus 100, organic waste by receiving the organic waste for the first time and a subsequent treatment process in detail.

Referring to FIG. 4, organic waste is introduced and preheated (for the first time) in the preheating tank 110 under the control of the control unit (not illustrated).

Referring to FIG. 5, the preheated organic waste is introduced into one thermal hydrolysis reactor 120a, and the thermal hydrolysis reactor initially receives heat energy (a steam form) from the outside to raise its temperature.

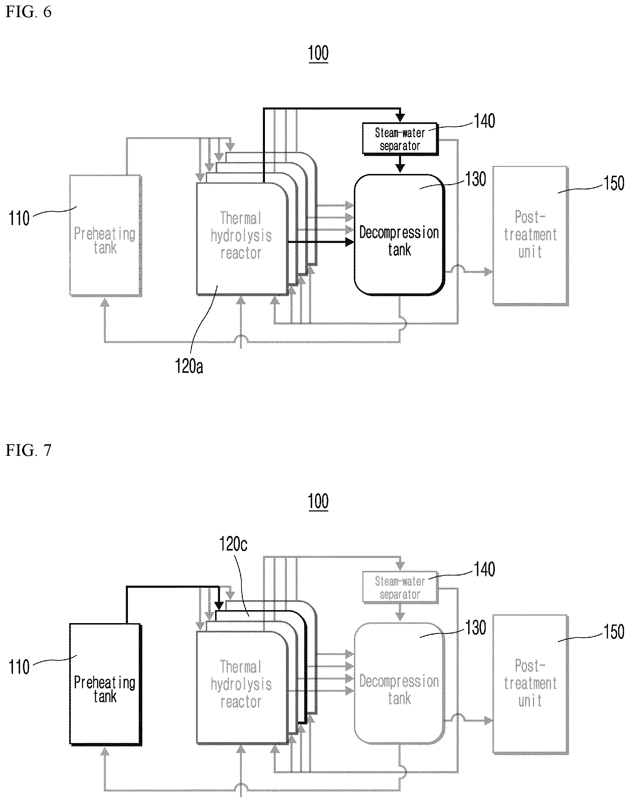

Referring to FIG. 6, if special abnormality does not occur in the thermal hydrolysis reactor 120a, the thermal hydrolysis reactor 120a discharges the remaining gaseous components except the amount of gaseous components that are sufficient to preheat the organic waste in the preheating tank 110 to the steam-water separator 140 and discharges all of the remaining products to the decompression tank 130 under the control of the control unit (not illustrated). When pressure within the thermal hydrolysis reactor 120a is greater than a preset reference value, the thermal hydrolysis reactor 120a discharges the gaseous components to the steam-water separator 140 until the internal pressure drops to the preset reference value or less and discharges all of the remaining products to the decompression tank 130.

Referring to FIG. 7, the organic waste is introduced into the preheating tank 110 and is preheated by gaseous components that have been returned. The preheated organic waste is introduced into the thermal hydrolysis reactor 120c.

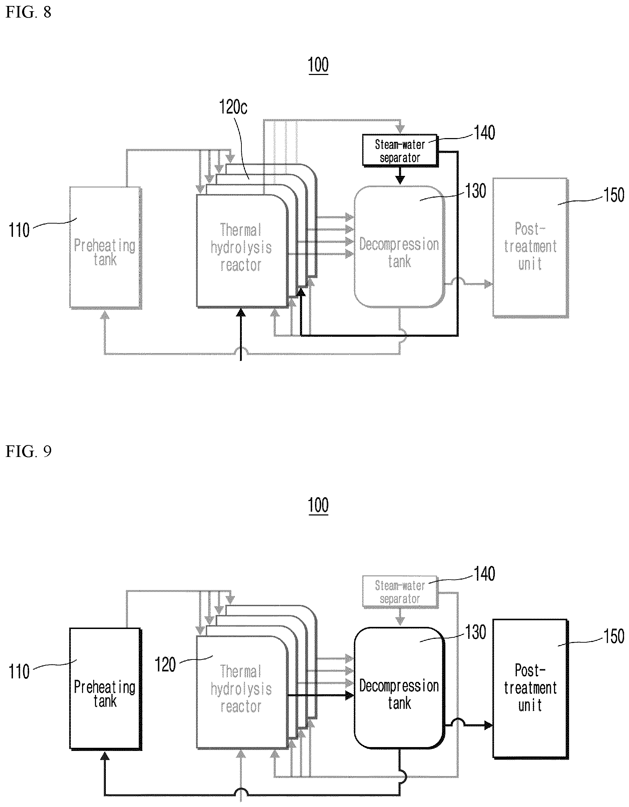

Referring to FIG. 8, liquid components separated by the steam-water separator 140 are introduced into the decompression tank 130, and the gaseous components are introduced into the thermal hydrolysis reactor 120c. Furthermore, the temperature of the thermal hydrolysis reactor 120c is raised because heat energy (a steam form) is applied from the outside to the thermal hydrolysis reactor.

In this case, when the gaseous components and the heat energy are applied to the thermal hydrolysis reactor 120c, the heat energy is applied from the outside to the thermal hydrolysis reactor after all of the gaseous components are preferentially applied to the thermal hydrolysis reactor. An external apparatus that applies the heat energy to the thermal hydrolysis reactor has relatively very high pressure. The steam-water separator 140 has relatively very low pressure. Accordingly, if both the gaseous components and the heat energy are applied to the thermal hydrolysis reactor 120c simultaneously, there is a problem in that the gaseous components are not fully applied from the steam-water separator 140 to the thermal hydrolysis reactor 120c due to a pressure difference. Even a problem in that the heat energy (steam) that is applied from the outside to the thermal hydrolysis reactor 120c is discharged toward the steam-water separator 140 may occur. In order to prevent the problem, the gaseous components are first applied from the steam-water separator 140 to the thermal hydrolysis reactor 120c, and the heat energy (steam) is then applied from the outside to the thermal hydrolysis reactor 120c. Accordingly, all of the components can be fully applied to the thermal hydrolysis reactor.

Referring to FIG. 9, under the control of the control unit (not illustrated), the decompression tank 130 transmits the separated liquid components to the post-treatment unit 150, and provides heat energy that is necessary for preheating by returning the separated gaseous components to the preheating tank 110.

As the gaseous components separated by the steam-water separator 140 are introduced into the thermal hydrolysis reactor 120c, the amount of heat energy that is applied from the outside can be reduced by the gaseous components. A thermal hydrolysis reaction is performed in the thermal hydrolysis reactor 120c the temperature of which has been raised as described above. The processes of FIGS. 6 to 9 may be repeated and processed again.

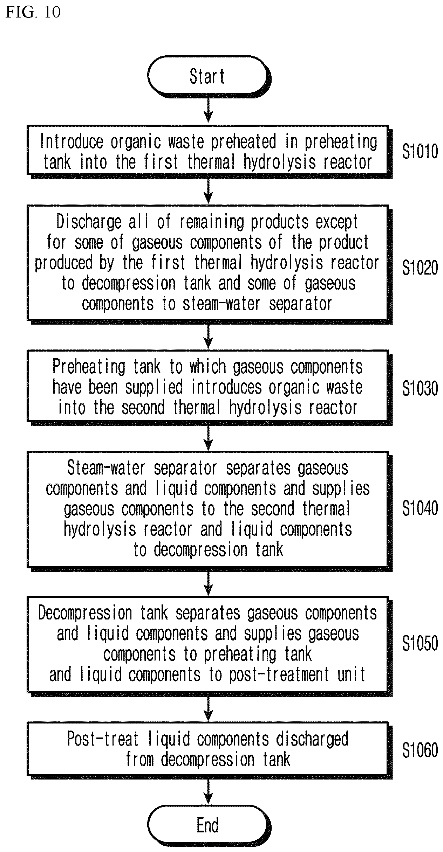

FIG. 10 is a flowchart illustrating an organic waste treatment method according to a first embodiment of the present disclosure.

Organic waste that has been preheated in the preheating tank 110 is introduced into the first thermal hydrolysis reactor 120 (S1010).

Some of gaseous components that have been generated in the first thermal hydrolysis reactor 120 are discharged to the steam-water separator 140, and all of the remaining products are discharged to the decompression tank 130 (S1020).

The preheating tank 110 to which the gaseous components have been supplied preheats the organic waste and introduces the preheated organic waste to the second thermal hydrolysis reactor 120 (S1030).

The steam-water separator 140 separates the gaseous components and liquid components, and supplies the gaseous components to the second thermal hydrolysis reactor 120 and the liquid components to the decompression tank 130 (S1040).

The decompression tank 130 separates the gaseous components and the liquid components, and supplies the gaseous components to the preheating tank 110 and the liquid components to the post-treatment unit 150 (S1050).

The second thermal hydrolysis reactor 120 to which the gaseous components have been supplied is additionally supplied with heat energy from the outside, performs a thermal hydrolysis reaction, and repeats the process S1020.

In a post-treatment unit, liquid components discharged by the decompression tank are post-treated (S1060).

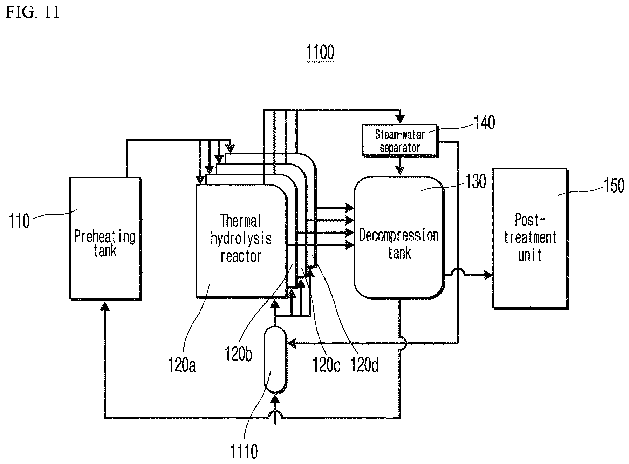

FIG. 11 is a diagram illustrating a construction of an organic waste treatment apparatus according to a second embodiment of the present disclosure.

Referring to FIG. 11, an organic waste treatment apparatus 1100 according to the second embodiment of the present disclosure further includes an ejector 1110 in addition to the components of the organic waste treatment apparatus 100.

The ejector 1110 simultaneously injects, into a specific thermal hydrolysis reactor 120, gaseous components separated by the steam-water separator 140 and steam (heat energy) from the outside, which is applied to raise the temperature of a specific thermal hydrolysis reactor, regardless of a pressure difference. An external apparatus that applies the steam (heat energy) to the thermal hydrolysis reactor has relatively very high pressure. The steam-water separator 140 has relatively very low pressure. Accordingly, if both the steam (heat energy) and the gaseous components are applied to the thermal hydrolysis reactor 120 at the same time, there may be a problem in that the gaseous components are not fully applied from the steam-water separator 140 to the thermal hydrolysis reactor 120 due to a pressure difference. Even a problem in that the heat energy (steam) that is applied from the outside to the thermal hydrolysis reactor 120 is discharged toward the steam-water separator 140 may occur. In order to prevent such a problem, the ejector 1110 is disposed at the intersection of a path along which the steam (heat energy) is applied from the outside to the thermal hydrolysis reactor and a path along which the gaseous components are applied from the steam-water separator 140 to the thermal hydrolysis reactor. The ejector 1110 receives the steam and the gaseous components that are provided to the respective paths, and applies each component to the thermal hydrolysis reactor 120 regardless of a pressure difference. Furthermore, the ejector 1110 enables the gaseous components that are discharged by the steam-water separator 140 to be applied to the thermal hydrolysis reactor 120 based on pressure at which the steam is sprayed from the outside to the thermal hydrolysis reactor. Accordingly, the ejector 1110 can prevent the gaseous components from being discharged from the thermal hydrolysis reactor to the steam-water separator 140, and can also improve the discharging speed of the gaseous components from the steam-water separator 140.

The control unit (not illustrated) controls the ejector 1110 to perform the aforementioned operation along with the components within the organic waste treatment apparatus 100.

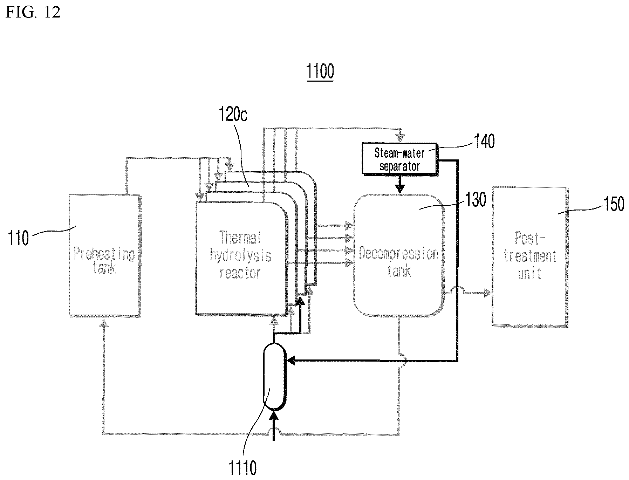

FIG. 12 is a diagram illustrating some of an operation of the organic waste treatment apparatus according to the second embodiment of the present disclosure. The organic waste treatment apparatus 1100 identically performs the operations illustrated in FIGS. 4 to 9, but performs the operation of the organic waste treatment apparatus 1100, which has been illustrated in FIG. 12, instead of the operation of the organic waste treatment apparatus 100, which has been illustrated in FIG. 8.

Referring to FIG. 12, liquid components separated by the steam-water separator 140 are introduced into the decompression tank 130, and gaseous components are introduced into the thermal hydrolysis reactor 120c. Furthermore, heat energy (a steam form) is applied from the outside to the thermal hydrolysis reactor 120c so that the temperature of the thermal hydrolysis reactor 120c is raised.

In this case, since the ejector 1110 is disposed at a path along which each component is injected into the thermal hydrolysis reactor 120c, gaseous components and heat energy can be injected into the thermal hydrolysis reactor 120c as the gaseous components and the heat energy are generated regardless of the sequence of the gaseous components and the heat energy without the need to sequentially inject the gaseous components and the heat energy due to a pressure difference. Furthermore, the gaseous components can be injected into the thermal hydrolysis reactor 120c by the ejector 1110 more rapidly.

The processes in FIG. 10 have been described as being sequentially executed, but this merely illustrates the technology spirit of an embodiment of the present disclosure. In other words, a person having ordinary knowledge in the art to which an embodiment of the present disclosure pertains may variously modify and change the processes by changing and executing the sequence of the processes illustrated in the drawing or executing one or more of the processes in parallel within a range that does not deviate from the intrinsic characteristic of an embodiment of the present disclosure. Accordingly, FIG. 10 is not limited to a timeseries sequence.

Meanwhile, the processes illustrated in FIG. 10 may be implemented in a computer-readable recording medium in the form of a computer-readable code. The computer-readable recording medium includes all types of recording devices in which data readable by a computer system is stored. That is, the computer-readable recording medium includes storage media, such as magnetic storage media (e.g., ROM, a floppy disk, and a hard disk), optical reading media (e.g., CD-ROM and a DVD), and a carrier wave (e.g., transmission through the Internet). Furthermore, the computer-readable recording medium may be distributed to computer systems connected over a network, and the computer-readable code may be stored and executed in a distributed manner.

The above description is merely a description of the technical spirit of the present embodiment, and those skilled in the art may change and modify the present embodiment in various ways without departing from the essential characteristic of the present embodiment. Accordingly, the embodiments should not be construed as limiting the technical spirit of the present embodiment, but should be construed as describing the technical spirit of the present embodiment. The technical spirit of the present embodiment is not restricted by the embodiments. The range of protection of the present embodiment should be construed based on the following claims, and all of technical spirits within an equivalent range of the present embodiment should be construed as being included in the scope of rights of the present embodiment.

## Claims

1. An organic waste treatment apparatus that discharges organic waste by decomposing the organic waste, the organic waste treatment apparatus comprising:
a preheating tank configured to receive and preheat organic waste to be treated;
a plurality of thermal hydrolysis reactors each configured to receive the preheated organic waste from the preheating tank and to thermally hydrolyze the preheated organic waste within a preset environment;
a steam-water separator configured to receive some of gaseous components of a product that has been thermally hydrolyzed in any one thermal hydrolysis reactor, to separate the gaseous components and liquid components, and to discharge the gaseous components to another thermal hydrolysis reactor;
a decompression tank configured to receive all of remaining products except the some of the gaseous components included in the product that has been thermally hydrolyzed in each thermal hydrolysis reactor, to separate the gaseous components and the liquid components, and to discharge the gaseous components to the preheating tank and the liquid components to an outside;
a post-treatment unit configured to receive the liquid components discharged by the decompression tank and to post-treat and discharge the received liquid components; and
a control unit configured to control an operation of each component of the organic waste treatment apparatus.

2. The organic waste treatment apparatus of claim 1, wherein each of the plurality of thermal hydrolysis reactors receives the preheated organic waste from the preheating tank at a time interval and thermally hydrolyzes the preheated organic waste within the preset environment.

3. The organic waste treatment apparatus of claim 1, wherein the preset environment has pressure of 1 to 23 bar and a temperature of 100 to 220°C.

4. The organic waste treatment apparatus of claim 1, wherein the decompression tank has relatively lower pressure than the thermal hydrolysis reactor and liquefies some of the product that has been thermally hydrolyzed.

5. The organic waste treatment apparatus of claim 1, wherein the post-treatment unit is able to be implemented as an anaerobic digestion tank or a sludge dewatering unit.

6. The organic waste treatment apparatus of claim 1, further comprising an ejector configured to inject steam that is introduced from the outside and the gaseous components that are separated and discharged by the steam-water separator to any one thermal hydrolysis reactor.

7. The organic waste treatment apparatus of claim 6, wherein the ejector increases a speed at which the gaseous components separated and discharged by the steam-water separator are injected into any one thermal hydrolysis reactor.

8. A method of treating organic waste so that an organic waste treatment apparatus can decompose and discharge the organic waste, the method comprising:
a preheating process of receiving and preheating organic waste to be treated by using a preheating tank;
a hydrolysis process of receiving the organic waste preheated in the preheating process and thermally hydrolyzing the organic waste within a preset environment by using a first thermal hydrolysis reactor;
a refining process of receiving some of gaseous components included in a product that has been thermally hydrolyzed in the hydrolysis process, separating the gaseous components and liquid components, and discharging the gaseous components to a second thermal hydrolysis reactor by using a steam-water separator;
a discharge process of receiving all of remaining products except the some of the gaseous components included in the product that has been thermally hydrolyzed in the hydrolysis process, separating the gaseous components and the liquid components by decompressing the remaining products by using a decompression tank, and discharging the gaseous components to the preheating tank and the liquid components; and
a post-treatment process of receiving, post-treating, and discharging the liquid components discharged by the decompression tank.

9. The method of claim 8, wherein each of the first thermal hydrolysis reactor and the second thermal hydrolysis reactor receives the preheated organic waste from the preheating tank at a time interval and thermally hydrolyzes the preheated organic waste within the preset environment.

10. The method of claim 8, wherein the preset environment has pressure of 1 to 23 bar and a temperature of 100 to 220°C .

11. The method of claim 8, wherein the decompression tank has relatively lower pressure than the thermal hydrolysis reactor and liquefies some of the product that has been thermally hydrolyzed.

12. The method of claim 8, wherein the post-treatment process is able to be performed by an anaerobic digestion tank or a sludge dewatering unit.
